Europäisches Patentamt

European Patent Office

Office européen des brevets

(19)

(11) Veröffentlichungsnummer: **0 069 945**
**B1**

(12) # EUROPÄISCHE PATENTSCHRIFT

(45) Veröffentlichungstag der Patentschrift:
03.06.87

(51) Int. Cl.⁴: **C 08 L 67/06,** B 29 C 41/08,
C 08 K 7/14

(21) Anmeldenummer: **82105944.1**

(22) Anmeldetag: **03.07.82**

(54) **Verfahren zur Herstellung einer Kunststoffschale oder einer kraftschlüssigen Kunststoffbeschichtung.**

(30) Priorität: **15.07.81 CH 4751/81**

(43) Veröffentlichungstag der Anmeldung:
**19.01.83 Patentblatt 83/3**

(45) Bekanntmachung des Hinweises auf die Patenterteilung:
**03.06.87 Patentblatt 87/23**

(84) Benannte Vertragsstaaten:
**AT DE FR IT NL**

(56) Entgegenhaltungen:
**EP - A - 0 069 944**
**FR - A - 2 097 778**
**FR - A - 2 362 895**
**US - A - 3 503 921**
**US - A - 4 251 641**

**CHEMICAL ABSTRACTS, Band 85, Nr. 18, November 1976, Seite 61, Nr. 125223m, Columbus, Ohio, USA D.I. NETTING et al.: "Use of hollow silicate microspheres in fiber reinforced plastics and syntactic foam cores"**

(73) Patentinhaber: **Bachmann, Werner,
Schwerzimattstrasse 35, CH-8912 Obfelden (CH)**

(72) Erfinder: **Bachmann, Werner, Schwerzimattstrasse 35,
CH-8912 Obfelden (CH)**

(74) Vertreter: **Riederer, Conrad A., Dr., Bahnhofstrasse 10,
CH-7310 Bad Ragaz (CH)**

## Beschreibung

Die Erfindung betrifft ein Spritzverfahren zur Erhaltung oder zur Erhöhung der Festigkeit von Objekten durch Aufbringen einer Kunststoffbeschichtung in Verbund mit dem Objekt oder zur Herstellung von Kunststoffschalen durch Aufbringen einer Kunststoffschicht auf die Innen- oder Aussenfläche einer Form. Das Verfahren kann beispielsweise für die Werterhaltung diverser Objekte aus Werkstoffen wie Stahl vorgesehen werden. Von besonderem Interesse ist die Sanierung von durch Korrosion gefährdeten unterirdischen Behältern für flüssige Brennstoffe.

Die Veröffentlichung «Öltanksanierung mit GFK», Technische Rundschau, Band 63, Nr. 38, vom 10.9.71, Seiten 17 bis 21, beschreibt ein Verfahren zur Tanksanierung, bei dem der alte Tank in der Erde belassen werden kann und dieser für den Aufbau eines Kunststofftanks als «verlorene Form» dient. Dies hat den Vorteil, dass keine Erdbewegungen notwendig sind und die Gartenanlage, die Bepflanzung usw. überhaupt nicht berührt werden. Der Kunststofftank wird gemäss dieser Vorveröffentlichung an Ort und Stelle am lecken Stahltank eingebaut und an die unter Umständen vorschriftsmässig zu korrigierenden Leitungen angeschlossen. Die Sanierung erfolgt so, dass der alte lecke Tank sauber gereinigt und mit einem Antihaftmittel ausgestrichen wird. Bei kleineren Anlagen bis zu 15 000 Liter wird der Kunststofftank stückweise im Handauflegeverfahren aufgebaut. Dazu wird erwähnt, dass diese Methode denkbar einfach ist, aber vom Arbeiter äusserste Zuverlässigkeit verlangt. Da an den senkrechten und überhängenden Partien des Tanks (Wände, Decke) das Harz leicht abläuft, muss mit relativ hochviskosen thixotropen Harzen gearbeitet werden. Dies bedingt, dass der Kunststoffmantel schicht- und stückweise aufgebaut werden muss. Zu diesem Zweck wird zuerst mit dem Roller ein so grosses Stück der Wand bestrichen, wie es dem zugerichteten Glasgewebe oder der Glasmatte entspricht. Dann wird dieses auf die gestrichene Fläche aufgerollt, mit dem Roller mit Polyester getränkt und mit der Lamellenwalze glatt gerollt. Das Rollen hat den Zweck, die Glasfasern allseitig mit Harz zu tränken und alle Luftblasen zu entfernen. Dabei ist äusserst wichtig, dass immer das ganze Glasgewebestück verharzt wird, weil nicht verharzte Teile nicht mehr glatt liegen und nach der beginnenden Aushärtung nicht mehr geglättet werden können. So wird Stück um Stück Glasgewebe in gleicher Weise gehartzt, dann wird eine neue Lage Glasgewebe versetzt gegenüber dem vorher verlegten Glasgewebe aufgehartzt. Für einen Tank, der selbsttragend sein soll, benötigt man mindestens fünf Lagen. Da der ausgehärtete Tank schwindet, liegt er dann lose im alten Stahltank. Wie bereits aus dem Wortlaut der Vorveröffentlichung hervorgeht, verlangt dieses Verfahren äusserst hohe Geschicklichkeit, ist sehr arbeitsintensiv und teuer. Da ferner wegen dem verwendeten Antihaftmittel und dem Schwund des Materials kein Verbund mit dem Stahltank erzielt wird, sondern der ausgehärtete Tank lose im alten Stahltank liegt, trägt der alte Stahltank nicht zur Festigkeit des neu gebildeten Kunststofftanks bei. Im gleichen Artikel «Öltanksanierung mit GFK» wird die Möglichkeit erwähnt, bei grossen Tanks den Belag im Spritzverfahren mit Rovings auszuführen. Dazu wird erwähnt, dass die zum Spritzen benötigte Anlage aus zwei Druckkesseln mit emaillierten Harzbehältern sowie einem Schneidwerk, das die endlosen Roving-Fasernstränge in beliebige Längen schneidet, besteht. Die beiden Harzkomponenten gelangen getrennt unter Druck zur Zweikomponenten-Spritzpistole, wo sie nach dem Düsenaustritt mit den gleichzeitig zugeführten Glasschnittfasern völlig durchmischt werden. Ausdrücklich wird erwähnt, dass dieses Verfahren grössere Investitionen verlangt und nur bei grösseren Tanks (über 15 000 Liter) angewendet werden kann. Auch dieses Verfahren verlangt eine Luftentfernung durch Ausrollen, was natürlich eine sehr aufwendige Arbeit darstellt. Besonders nachteilig wirken sich dabei herumfliegende Glasfaserstücke aus, die bekannterweise leicht in die Haut eindringen und starken Juckreiz verursachen. Das beschriebene Verfahren hat sich daher in der Praxis nicht durchgesetzt.

Durch die Literaturstelle «Use for hollow silicate microspheres in fiber reinforced plastics and syntactic foam cores» (ICCM, Proc. Ing. Conf. Compos. Mater. 1975 (Pub. 1976) 1, 368–85, ist bekannt geworden, mit einer neuartigen Spritzpistole gleichzeitig Kunstharz und Mikrohohlkörper sowie Glasfaserstücke zu spritzen, wobei auch hier die Glasfasern erst nach dem Austritt des Kunstharzes aus der Spritzpistole zugeführt werden. Es treten daher auch hier die vorher beschriebenen Nachteile auf, dass Glasfasernstücke in der Luft im Tankinnern herumfliegen und dass nach dem Spritzen zusätzlich ein arbeitsintensives Ausrollen erfolgen muss, um die Glasfasern völlig zu benetzen und Lufteinschlüsse zu entfernen.

Der vorliegenden Erfindung liegt die Aufgabe zugrunde, ein Spritzverfahren zu finden, durch das eine Glasfasern enthaltende kraftschlüssige Kunststoffbeschichtung oder eine Kunststoffschale mit geringem Arbeitsaufwand und mit geringerer gesundheitlicher Belastung durch schädliche Dämpfe hergestellt werden kann.

Gemäss der Erfindung wird dies dadurch erreicht, dass eine Masse mit folgender Zusammensetzung ohne Luftzufuhr mit einer Einkomponentenanlage aufgespritzt wird:

100–150 Gew. Teile ungesättigtes Polyesterharz aus 1–2 Mol Phthalsäure, 1–2 Mol Maleinsäure, 1–2 Mol Äthylenglykol oder Diaethylenglykol, 1–2 Mol Propylenglykol

oder aus 1–2 Mol Isophthalsäure, 1–2 Mol Tetrahydrophthalsäure, 1–2 Mol Maleinsäure, 1–2 Mol Äthylenglykol oder Diäthylenglykol, 1–2 Mol Propylenglykol, gelöst in

40– 75 Gew. Teilen Styrol und

1– 15 Gew. Teilen Diallylphthalat

1– 10 Gew. Teilen Methylmethacrylat

1- 25 Gew. Teilen Vinyltoluol, Härtungs-Beschleuniger und Inhibitoren

15- 30 Gew. Teile Kurzglasfasern mit einer Länge von max. 0,8 mm

5- 25 Gew. Teile anorganische Mikrohohlkörper mit einem Durchmesser von 0,05–0,5 mm sowie Hilfsmittel.

Vorteilhaft ist auch, dass keine aufwendige Zweikomponenten-Spritzanlage mit Roving-Schneidmaschine notwendig ist. Auch erübrigt sich ein Ausrollen, da keine Lufteinschlüsse entstehen.

Das für die Herstellung der Kunststoffschale oder Kunststoffschicht aufgespritzte Material hat eine Härtungszeit, die ideal auf die zum Herstellen dieser Schicht erforderliche Arbeitszeit abgestimmt ist. Die Verarbeitungszeit beträgt bei 20 °C Materialtemperatur und einer Menge von 15 kg 25 bis 35 Minuten und bei tieferen Temperaturen von bis zu 12 °C 40 bis 50 Minuten. Die Anhärtungszeit ist von der Temperatur und der Schichtdicke abhängig und entspricht der Zeit bis zum Erreichen der Maximaltemperatur der exothermen Reaktion und Abkühlen auf Umgebungstemperatur. Bei 20 °C und 5 mm Schichtdicke beträgt die Anhärtungszeit 90 Minuten. Bei 12 °C hingegen beträgt sie ca. 5 Stunden. Nach der Anhärtungszeit wird das Material vorzugsweise während 12 Stunden bei 40 °C nachgehärtet.

Die maximale Temperatur der exothermen Reaktion der Härtung beträgt bei einer Verarbeitungstemperatur von 12 °C bis 20 °C und einer Schichtdicke von 5 mm 45 °C.

Vorteilhaft hinsichtlich des apparativen Aufwandes bei der Verarbeitung des Materials wirkt sich aus, dass nur eine Einkomponentenanlage erforderlich ist. Das Aufbringen des Materials erfolgt ohne Luft unter verhältnismässig hohem Druck.

Vorteilhaft hinsichtlich des Arbeitsaufwandes bei der Verarbeitung des Materials wirkt sich aus, dass auf die Entlüftung der Kunststoffschicht verzichtet werden kann.

Für die Härtung des Materials werden je nach der Vorbeschleunigung vorzugsweise Ketonperoxide mit einem Anteil von 1,2 bis 2,5% verwendet.

Ausser den genannten Komponenten kann die Masse noch folgende Komponenten enthalten:

0–10 Gew. Teile Glasfasern mit einer Länge von max. 3 mm

0– 5 Gew. Teile Glasfasern mit einer Länge von max. 10 mm

0–10 Gew. Teile Kunststoffasern mit einer Länge von max. 3 mm

0– 5 Gew. Teile Kunststoffasern mit einer Länge von max. 10 mm.

**Patentansprüche**

1. Spritzverfahren zur Erhaltung oder Erhöhung der Festigkeit von Objekten durch Aufbringen einer Kunststoffbeschichtung in Verbund mit dem Objekt oder zur Herstellung von Kunststoffschalen durch Aufbringen einer Kunststoffschicht auf die Innen- oder Aussenfläche einer Form, von welcher die Kunststoffschale nach dem Aushärten abgenommen werden kann, dadurch gekennzeichnet, dass eine Masse mit folgender Zusammensetzung ohne Luftzufuhr mit einer Einkomponentenanlage aufgespritzt wird:

100–150 Gew. Teile ungesättigtes Polyesterharz aus 1–2 Mol Phthalsäure, 1–2 Mol Maleinsäure, 1–2 Mol Äthylenglykol oder Diaethylenglykol, 1–2 Mol Propylenglykol

oder aus 1–2 Mol Isophthalsäure, 1–2 Mol Tetrahydrophthalsäure, 1–2 Mol Maleinsäure, 1–2 Mol Äthylenkglykol oder Diaethylenglykol, 1–2 Mol Propylenglykol, gelöst in

40- 75 Gew. Teilen Styrol und

1- 15 Gew. Teilen Diallylphthalat

1- 10 Gew. Teilen Methylmethacrylat

1- 25 Gew. Teilen Vinyltoluol, Härtungs-Beschleuniger und Inhibitoren

15- 30 Gew. Teile Kurzglasfasern mit einer Länge von max. 0,8 mm

5- 25 Gew. Teile anorganische Mikrohohlkörper mit einem Durchmesser von 0,05–0,5 mm sowie Hilfsmittel.

2. Spritzverfahren nach Anspruch 1, dadurch gekennzeichnet, dass die Spritzmasse zusätzlich 0–10 Gew. Teile Glasfasern einer Länge von max. 3 mm enthält.

3. Spritzverfahren nach Anspruch 1 oder 2, dadurch gekennzeichnet, dass die Spritzmasse zusätzlich 0–5 Gew. Teile Glasfasern einer Länge von max. 10 mm enthält.

4. Spritzverfahren nach einem der Ansprüche 1 bis 3, dadurch gekennzeichnet, dass die Spritzmasse zusätzlich 0–10 Gew. Teile Kunststoffasern einer Länge von max. 3 mm enthält.

5. Spritzverfahren nach einem der Ansprüche 1 bis 4, dadurch gekennzeichnet, dass die Spritzmasse zusätzlich 0–5 Gew. Teile Kunststoffasern einer Länge von max. 10 mm enthält.

**Claims**

1. Method of spraying for maintaining or obtaining mechanical strength of objects by application of a resin layer strongly bonded to the object, or for manufacturing shells of plastics by application of a resin layer on the inside or outside of a mould from which, after hardening, the shell of plastics may be removed, characterized in that, by means of a one component device, a material with the following composition is sprayed without the use of air:

100–150 units of weight unsaturated polyester resin from 1–2 mol phthalic acid, 1–2 mol maleic acid, 1–2 mol ethyleneglycol or diethyleneglycol, 1–2 mol propyleneglycol

or form 1–2 mol isophthalic acid, 1–2 mol tetrahydrophthalic acid, 1–2 mol maleic acid, 1–2 mol ethyleneglycol or diethyleneglycol, 1–2 mol propyleneglycol solved in

40- 75 units of weight styrene and

1– 15 units of weight diallylphthalat
1– 10 units of weight methylmetacrylate
1– 25 units of weight vinyltoluene, hardening accelerators and inhibitors,
15– 30 units of weight short glass fibres of maximum 0,8 mm length
5– 25 units of weight inorganic micro-capsules of 0,05 to 0,5 mm diameter, and auxiliary agents.

2. Method of spraying as in claim 1, characterized in that the spraying material contains additionally 0–10 units of weight glass fibres of maximum 3 mm length.

3. Method of spraying as in claim 1 or 2, characterized in that the spraying material contains additionally 0–5 units of weight glass fibres of maximum 10 mm length.

4. Method of spraying as in one of the claims 1 to 3, characterized in that the spraying material contains additionally 0–10 units of weight synthetic fibres of maximum 3 mm length.

5. Method of spraying as in one of the claims 1 to 4, characterized in that the spraying material contains additionally 0–5 units of weight synthetic fibres of maximum 10 mm length.

**Revendications**

1. Procédé de pulvérisation pour l'obtention ou l'augmentation de la résistance mécanique d'objets par application d'un enduit de matière plastique uni intimement à l'objet ou pour la fabrication de coques en matière plastique par application d'une couche de matière plastique sur la surface intérieure ou extérieure d'un moule duquel la coque en matière plastique peut être retirée après son durcissement complet, caractérisé en ce qu'une masse ayant la composition suivante est pulvérisée sans apport d'air, au moyen d'une installation pour un seul composant:

100–150 parties en poids de résine de polyester insaturé, formée de 1–2 mol d'acide phtalique, 1–2 mol d'acide maléique, 1–2 mol d'éthylèneglycol ou de diéthylèneglycol, 1–2 mol de propylèneglycol ou de 1–2 mol d'acide isophtalique, 1–2 mol d'acide tétrahydrophtalique, 1–2 mol d'acide maléique, 1–2 mol d'éthylèneglycol ou de diéthylèneglycol, 1–2 mol de propylèneglycol, dissoutes dans
40– 75 parties en poids de styrène et
1– 15 parties en poids de phtalate de diallyle,
1– 10 parties en poids de méthacrylate de méthyle,
1– 25 parties en poids de vinyltoluène, des accélérateurs de durcissement et des inhibiteurs,
15– 30 parties en poids de courtes fibres de verre d'une longueur de 0,8 mm au maximum,
5– 25 parties en poids de microcorps creux inorganiques ayant un diamètre de 0,05 à 0,5 mm et agents auxiliaires.

2. Procédé de pulvérisation selon la revendication 1, caractérisée en ce qu'elle contient en plus de 0 à 10 parties en poids de fibres de verre d'une longueur de 3 mm au maximum.

3. Procédé de pulvérisation selon la revendication 1 ou 2, caractérisée en ce qu'elle contient en plus de 0 à 5 parties en poids de fibres de verre d'une longueur de 10 mm au maximum.

4. Procédé de pulvérisation selon l'une quelconque des revendications 1 à 3, caractérisée en ce qu'elle contient en plus de 0 à 10 parties en poids de fibres de matière plastique d'une longueur de 3 mm au maximum.

5. Procédé de pulvérisation selon l'une quelconque des revendications 1 à 4, caractérisée en ce qu'elle contient en plus de 0 à 5 parties en poids de fibres de matière plastique d'une longueur de 10 mm au maximum.